# EUROPEAN PATENT SPECIFICATION

(11) **EP 3 912 707 B1**
(45) Date of publication and mention of the grant of the patent: **11.02.2026**
(21) Application number: 19910234.4
(22) Date of filing: 09.05.2019
(51) Int. Cl.: B01D 61/42, B01D 61/44, C02F 1/469, H01M 8/22, B01D 61/48, B01D 61/52, B01D 61/58

(54) **INDUSTRIAL SALINITY GRADIENT BATTERY AND ASSOCIATED METHOD**
INDUSTRIELLE SALZGRADIENTENBATTERIE UND ZUGEHÖRIGES VERFAHREN
BATTERIE INDUSTRIELLE À GRADIENT SALIN ET PROCÉDÉ ASSOCIÉ

(30) Priority: 18.01.2019 CL 2019147
(43) Date of publication of application: 24.11.2021
(73) Proprietor: Investigaciones Forestales Bioforest S.A., Concepción 4190000 (CL)
(72) Inventor: GONZÁLEZ VOGEL, Álvaro Mauricio, San Pedro de la Paz, Región del Bío-Bío, 4131124 (CL)
(74) Representative: Plasseraud IP
(86) International application number: PCT/CL2019/050036
(87) International publication number: WO 2020/146957

(56) References cited:
- KR-A- 20160 055 357
- US-A1- 2015 274 555
- SALEEM MUHAMMAD WAJID ET AL: "Performance optimization of integrated electrochemical capacitive deionization and reverse electrodialysis model through a series pass desorption process", JOURNAL OF ELECTROANALYTICAL CHEMISTRY, ELSEVIER, AMSTERDAM, NL, vol. 795, 19 April 2017 (2017-04-19), pages 41 - 50, XP085027668, ISSN: 1572-6657, DOI: 10.1016/J.JELECHEM.2017.04.025
- JANDE Y A C ET AL: "Integrating reverse electrodialysis with constant current operating capacitive deionization", JOURNAL OF ENVIRONMENTAL MANAGEMENT, ELSEVIER, AMSTERDAM, NL, vol. 146, 20 August 2014 (2014-08-20), pages 463 - 469, XP029064899, ISSN: 0301-4797, DOI: 10.1016/J.JENVMAN.2014.07.039
- YUSUFU ABEID CHANDE JANDE ET AL: "Simultaneous Production of Freshwater and Energy from Saline Water using Hybrid Capacitive Deionization-Reverse Electrodialysis", INTERNATIONAL JOURNAL OF RESEARCH IN CHEMICAL, METALLURGICAL AND CIVIL ENGINEERING, vol. 1, no. 1, 1 January 2014 (2014-01-01), pages 35 - 40, XP055612664
- JONGMOON CHOI, PEMA DORJI, HO KYONG SHON, SEUNGKWAN HONG: "aPPLICATIONS OF CAPACITIVE DEIONISATION: dESALINATION, SOFTENING, SELECTIVE REMOVAL, AND ENERGY EFFICIENCY", DESALINATION, vol. 449, 26 October 2018 (2018-10-26), pages 118 - 130, XP002810793, DOI: HTTPS://DOI.ORG/10.1016/J.DESAL.2018.10.013
- SALEEM, M. ET AL.: "Performance optimization of integrated electrochemical capacitive deionization and reverse electrodialysis model through a series pass desorption process", JOURNAL OF ELECTROANALYTICAL CHEMISTRY, vol. 795, 15 June 2017 (2017-06-15), pages 41 - 50, XP085027668, ISSN: 1572-6657, DOI: 10.1016/j.jelechem.2017.04.025
- CHANDE, Y. ET AL.: "Simultaneous Production of Freshwater and Energy from Saline Water using Hybrid Capacitive Deionization-Reverse Electrodialysis", JOURNAL OF RESEARCH IN CHEMICAL, METALLURGICAL AND CIVIL ENGG., vol. 1, 2014, pages 35 - 40, XP055612664, ISSN: 2349-1442

## Description

### Field of the Invention:

The invention relates to the field of energy storage in the form of salinity gradients, and subsequent release or supply of electrical energy to distribution grids, and as a complement to electrical energy generating sources, especially non-conventional renewable energies, such as solar energy and wind energy.

### Background:

An increase in non-conventional renewable energies, such as solar and wind energy, has been observed in recent years, with a clear upward trend. For this reason, large-scale electrical energy storage systems are becoming more and more necessary. Thus, there is a need for effective solutions with a low environmental impact. In addition, the use of industrial batteries would cushion the fluctuations presented in the generation or overproduction of electrical energy, and competitive advantages could be obtained from storing and distributing electrical energy according to the market prices.

The use of salinity gradients for producing electrical energy is addressed in various scientific publications and patents, using different strategies. Thus, patent application WO2007/009196 A1 refers to an application that uses reverse electrodialysis (RED) technology for generating electrical energy using the seawater and concentrated brine gradient from a reverse osmosis (RO) plant, or evaporation. However, this system is open, prone to fouling and scales due to impurities present in seawater or brine. This system is especially useful for recovering energy from the desalination process using brines which are generally discarded, but it is not useful for energy storage and release of the same in controlled periods. Furthermore, RED is included sequentially following the desalination step, in contrast to the present invention, and capacitive deionization (CDI) technology is not included in any part of the process. This system corresponds to an energy recovery system in desalination plants and not to a battery where energy can be stored and released according to the requirements of the industry where it is being used.

Another patent application addressing the hybrid use of technologies for energy recovery from salinity gradients is KR20150034543 A. This disclosure combines PRO (pressure-retarded osmosis) technology with RED, for extracting energy from a gradient generated between a highly concentrated brine and fresh water. This system purpose is recovering the energy contained in salinity gradients and not charging and discharging in a sealed system. Furthermore, it does not mention brine preparation, the use of other technologies such as RO and CDI, and the way RED works under conditions of a high osmotic potential.

In terms of storage in salinity gradients, patent application WO2010/008275 A1 discloses energy storage with a brine reservoir especially designed for dikes or dams, accumulating water from rivers or lakes, which will be discharged into the sea. This document also mentions the potential energy from the difference in height, where it is inferred that hydroelectric energy can be recovered. However, this is an open system, prone to contamination with microorganisms, fouling and scales, the salinity gradient potential is not the maximum between seawater and freshwater, and it would not allow charging the system if fresh water is not available. On the same line, patent US8795525 (B2) discloses the use of osmotic potential for energy accumulation and subsequent release. However, it does not mention the combination of technologies proposed in the present invention, nor the use of a controlled environment with a highly soluble salt in a sealed system.

Disclosures ES2162592 (B1), WO2011004303 (A1), and CN203938503 (U) mention the use of osmotic potential, but only for recovering energy from salinity gradients.

On the other hand, disclosures KR101544747 (B1), CN204334382 (U), CN104098158 (A), KR20130003765 (A), KR101596301 (B1), and CN202586809 (U) consider the generation of electrical energy using combinations with RED. However, these are not sealed systems with a prepared saline solution, nor consider the combination of technologies proposed in the present invention for charging and discharging analogously to a battery.

In general, the literature found in the state of the art does not include the concept of an industrial battery using a sealed and controlled system, under aseptic conditions, with a highly soluble salt, which is stable under working conditions. Disclosures generally consider energy recovery from salinity gradients. According to this, a stationary system for storage, and subsequent supply into the electrical grid, is desirable to cushion changes in production and demand by way of desalination techniques in the charging mode, and the recovery of electrical energy from salinity gradients in the discharging mode, of said industrial battery.

### Brief Description of the Drawings:

Figure 1 is a schematic representation of the process, where several technologies are combined, allowing a storage mode (charging mode B) and a supply mode (discharging mode A) of electrical energy.
Figure 2 is the way of feeding the RED module with the concentrated saline solutions, to avoid deformation of the membranes due to osmotic potential, where the RED module has 3 RED units inside.
Figure 3 is the way of charging (B) and discharging (A) the CDI module, described in more detail.

### Detailed Description of the Invention:

The invention relates to a system of storage and supply of electrical energy as defined in claim 1, where said system comprises an industrial salinity gradient battery, which comprises an energy discharging (A) or supply subsystem, and an energy charging (B) or storage subsystem, inside the same sealed compartment.

In general, the discharging subsystem (A) comprises combining a capacitive deionization module, CDI (2) and a reverse electrodialysis module, RED (1), together with tanks of desalinated water storage (4, 6) and tanks of dilute salts storage (3, 5); and the charging subsystem (B) comprises combining the CDI module (2) and a desalination module (12), together with the tanks of desalinated water storage (4, 6) and the tanks of dilute salts storage (3, 5); both subsystems use the same CDI module (2), where the highly soluble salts are retained inside in order to release electrical energy into the discharging subsystem (A) from the electrodes of the CDI module (2) when releasing said contained salts, and in the charging subsystem (B) electrical energy is consumed to move the salts towards the electrodes of the CDI module (2), returning to the original state.

Furthermore, the invention relates to a method for storing and supplying electrical energy as defined in claim 8, where said method comprises providing an industrial salinity gradient battery in a system inside the same compartment, sealed, with an energy discharging (A) or supply mode and an energy charging (B) or storage mode.

In general, the discharging mode (A) comprises combining a capacitive deionization module, CDI (2) and a reverse electrodialysis module, RED (1), together with tanks for desalinated water storage (4, 6) and tanks for dilute salts storage (3, 5); the charging mode (B) comprises combining the CDI module (2) and a desalination module (12), together with the tanks for desalinated water storage (4, 6) and the tanks for dilute salts storage (3, 5); wherein retained highly soluble salts are provided inside the CDI module (2) in order to release electrical energy into the discharging mode (A) from the electrodes of the CDI module (2) when releasing said contained salts, and in the charging mode (B), the same CDI module (2) consumes electrical energy to move the salts towards the electrodes of the CDI module (2), thereby recharging the CDI module (2), returning to the original state.

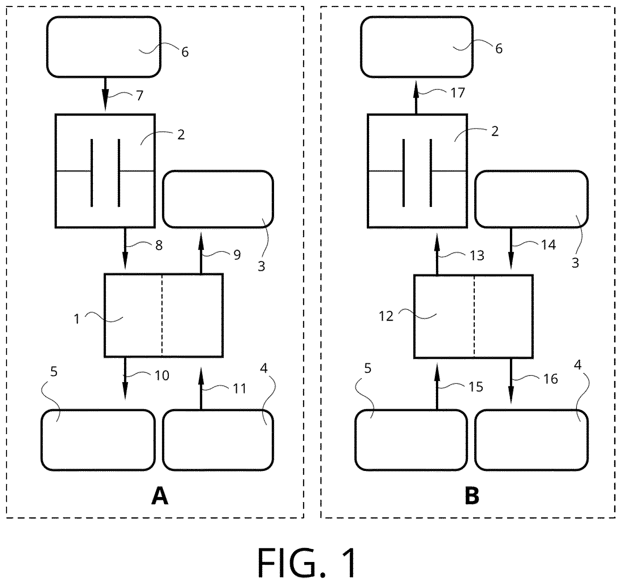

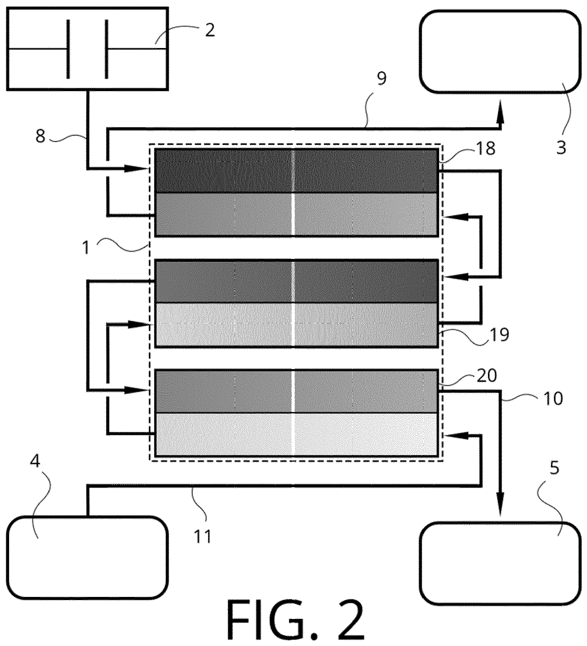

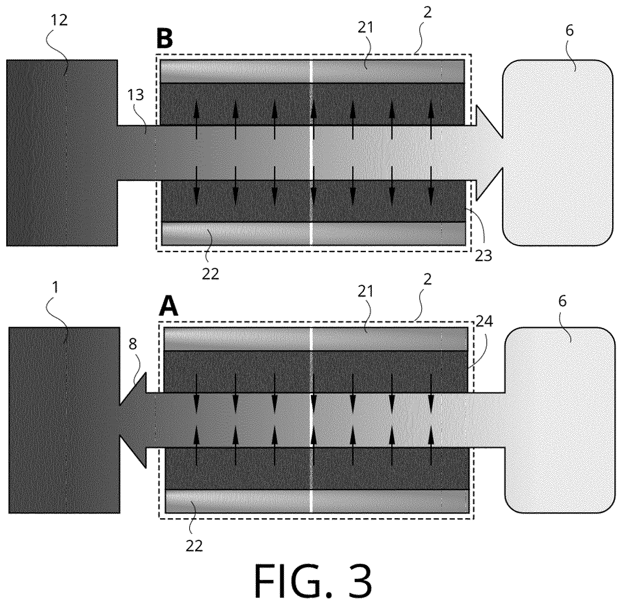

Wherein the energy discharging (A) or supply subsystem comprises (see Figure 1):
- a tank for desalinated water storage (6), the content (7) of which passes through the CDI module (2);
- a highly soluble salt contained in the CDI module (2), preferably being sodium acetate or potassium acetate for its stability, innocuousness, and accessibility;
- a CDI module (2) in discharging mode (A), which has carbon-based electrodes (23, 24) and current collecting electrodes (21, 22) (shown in Figure 3), where salts contained in the carbon-based electrodes (23, 24) are released, such as: activated carbon, graphene aerogels, or some other carbonized aerogel, obtaining a stream of concentrated brine (8). The release of these salts leads to the release of electrical energy, in a similar manner to the discharge of a supercapacitor;
- a RED module (1), comprising at least 3 RED units (18, 19, and 20) (see Figure 2), which receives the stream of concentrated brine (8);
- a tank for storage (4) of desalinated water (11) passing in a countercurrent configuration with respect to the concentrated brine (8) through the RED module (1), promoting an electrochemical potential for electrical energy generation; and
- tanks for storage of dilute salts or mixture (3, 5) to store the diluted saline solutions (9, 10) coming from the RED module (1) outlet.

The discharging (A) or supply method related to the discharging subsystem (A) of the invention comprises the steps of:
- providing a tank for desalinated water storage (6), the content (7) of which passes through a CDI module (2);
- providing a tank for desalinated water storage (4), the content (11) of which passes through the RED module (1);
- continuously measuring the level of the water storage tanks (4, 6), directly indicating the level of charging or discharging;
- providing a highly soluble salt contained in the CDI module (2), preferably being sodium acetate or potassium acetate for its stability, innocuousness, and accessibility;
- providing a CDI module (2) having carbon-based electrodes (23, 24) and current collecting electrodes (21, 22) (shown in Figure 3) in discharging mode (A), where salts contained in the carbon-based electrodes (23, 24) are released, such as: activated carbon, graphene aerogels, and some other carbonized aerogel, generating a stream of concentrated brine (8). The release of these salts leads to the release of electrical energy, in a similar manner to the discharge of a supercapacitor;
- leading the salts contained in the CDI module (2) through a stream of concentrated brine (8) to the RED module (1);
- providing a RED module (1), comprising at least 3 RED units (18, 19, and 20) (see Figure 2);
- passing the concentrated brine (8) through the RED module (1) in a countercurrent configuration with respect to the desalinated water (11), coming from the desalinated water storage tank (4), promoting an electrochemical potential for electrical energy generation from the salinity gradient generated between the concentrated brine (8) and the desalinated water (11); and
- providing diluted salts or mixture tanks (3, 5) for accumulating the diluted saline solutions (9, 10) coming from the RED module (1) outlet.

Wherein the energy charging (B) or storage subsystem comprises:
- a desalination module (12), which allow separating the salt contained in the streams of diluted salts (14, 15) from the tanks for storage of dilute salts or mixture (3, 5), with electrical energy coming from the grid or from electrical energy generation sources, in low consumption or overproduction periods, obtaining a stream of concentrated brine (13) and a stream of desalinated water (16); wherein the desalination module (12) comprises a reverse osmosis module, RO, or a conventional electrodialysis module, ED;
- the CDI module (2) having carbon-based electrodes (23, 24) and current collecting electrodes (21, 22) in charging mode (B), where electrical energy is consumed to move the salts towards the carbon-based electrodes (23, 24), such as: activated carbon, graphene aerogels, or some other carbonized aerogel; where the salts come from the concentrated brine stream (13);
- a tank for storage (4) of desalinated water (16) coming from the desalination module (12); and
- a tank for storage (6) of desalinated water (17) coming from the CDI module (2), to return to the initial charged-battery state.

The charging (B) or storage method related to the charging (B) subsystem of the invention comprises the steps of:
- providing a desalination module (12) comprising a reverse osmosis module, RO, or a conventional electrodialysis module, ED;
- providing tanks for mixture storage (3, 5), containing dilute salts (14, 15) in solution;
- passing, through the desalination module (12), streams of mixture or dilute salts (14, 15) coming from the mixture storage tanks (3, 5);
- separating the salt contained in the streams of diluted salts (14, 15) from the mixture storage tanks (3, 5), with electrical energy from the grid or from electrical energy generation sources, in low consumption or overproduction periods;
- obtaining a stream of desalinated water (16) at the desalination module (12) outlet and a stream of concentrated brine (13);
- providing a CDI module (2) having carbon-based electrodes (23, 24) and current collecting electrodes (21, 22) in charging mode (B), where electrical energy is consumed to move the salts from the concentrated brine stream (13) towards the carbon electrodes (23, 24);
- providing a tank for storage (4) of desalinated water, to accumulate the desalinated water (16) coming from the desalination module (12); and
- providing a tank for storage (6) of desalinated water, to accumulate the water (17) coming from the CDI module (2), to return to the initial charged-battery state.

A salt is used that is extremely highly soluble in water, pH neutral, non-toxic, and stable under operating conditions. One of the preferred salts is potassium acetate (C₂H₃KO₂) with a (stable) solubility of 9 to 12M from 0°C to 80°C, non-toxic, very abundant, of low density, of low viscosity at high concentrations, pH 7.5-8.5, and whose spillage does not represent a risk to the environment. In addition, ammonium nitrate, sodium iodide, cesium chloride, or silver nitrate can be used, being salts highly soluble in water, however, they are less preferred due to environmental hazards, health concerns, and costs that limit its application. Other salts having water solubility above 1M and stable under the selected operating conditions can be used in practice, but it should be considered that the lower the concentration of the salt, the less energy density reached by the battery. Another option to salts is the use of ionic liquids, however, due to their high cost, their use is not preferred.

Figure 1 shows the invention's typical mode of operation. In the period of supply to the electrical grid, or discharging mode (A) of the battery, the water accumulated in a storage tank (6) passes by means of a flow stream (7) through the CDI module (2), releasing the contained salts, in a similar manner to the discharge of a supercapacitor. The CDI module (2), acting as a supercapacitor, allows rapid release of energy, according to the requirements of the electrical grid. Reference is made to a supercapacitor due to its high charge capacity, on the order of Farads, compared to conventional capacitors. In addition, the principle of operation is very similar to the CDI module, since the charge in the supercapacitors is based on the electrostatic double layer capacitors (EDLCs) phenomenon and pseudo-capacitance. The concentrated salts in a stream of concentrated brine (8), coming from the CDI module (2), pass through the RED module (1), as a second step, extracting the electrical energy from the salinity gradient generated between the desalinated water (11), coming from one of the storage tanks (4), and the concentrated salts in the stream of concentrated brine (8), coming from the CDI module (2). In the discharging mode (A) of the system, the energy contained in the accumulation of charges by the salts contained in the CDI module (2) is released and diluted salts (9, 10) are obtained, also called mixture, accumulating in the storage tanks (3, 5). The CDI module (2) can include pseudo-capacitance to increase the amount of stored energy. This pseudo-capacitance is due to the presence of components that can be oxidized and reduced in the electrodes, these redox reactions (reduction-oxidation reactions) differ from the mechanism for charge storage by ion separation and are currently used in commercial supercapacitors. Those components that can be oxidized and reduced correspond to metals such as manganese, iridium, iron, ruthenium, or titanium sulfide that are integrated as particles in the carbon-based electrodes (23, 24), and whose reduction or oxidation is mediated through the current collecting electrodes (21, 22). This is how these components are reduced by capturing electrons and oxidized by shedding electrons, thereby producing energy, which is stored in the metal oxide by means of said redox reactions, which adds to the generation of energy due to the release of ions by concentration gradient in the CDI module (2).

On the other hand, in the energy charging (B) or storage mode in the battery, a commercial desalination module, either RO or ED (12), allows separating the diluted salts (14, 15) coming from the mixture storage tanks (3, 5), regenerating the system by obtaining concentrated salts in a stream of concentrated brine (13), and another stream of desalinated water (16), which is accumulated in a tank (4) for that purpose. The stream of concentrated brine (13) passes through the CDI module (2), where salts are stored in the electrodes when supplying the CDI module (2) with electrical energy. When extracting salts from the stream of concentrated brine (13), a stream of desalinated water (17) is obtained, being accumulated in a tank (6), thereby returning to the initial state, or full battery charge. When using a solution of a highly soluble pure salt, without the presence of encrusting species, organic compounds, and microorganisms, the RO or the ED system can work without pretreatment systems.

For the technologies to coexist, that is, for the 3 modules, CDI (1), RED (2) and RO or ED (12), can work together, the working ranges of each of the modules and of the solutions used should be met. For example, the battery can work in a range of 4 to 60°C, preferably between 40 and 60°C, to prevent water freezing and avoid deformation of the RED module (1) membranes at high temperatures. The RO module (12) can work up to more than 100 bars (10 MPa) pressure, depending on the concentration of salt in the brine produced, and depending on whether the configuration of the RO module (12) is cascading, thus, the pressure of the streams of diluted salts (14, 15) should be increased, before entering the RO module (12). Also, the pressure should be reduced in the stream of concentrated brine (13), at pressures accepted by CDI module (2). If a RO module is used for the desalination module (12), a cascading or multi-stage system is preferred due to the high osmotic potential, in addition to including an extra energy recovery system by releasing hydraulic pressure before entering the CDI module (2). If an ED module is used for the desalination module (12), the ED module should be multi-stage for gradual desalination, considering the distribution of streams for efficient operation, thus reducing the problems which could be generated by the difference in osmotic pressures.

The battery level may be measured by the level of water in the storage tanks (4, 6) for desalinated water. The level in the tanks should indicate the percentage of battery charge, since it is directly proportional to the storage of electrical energy. The measurement of the level of a water storage tank (4, 6) can be made by monitoring the level of a tank using commercial level sensors. By modifying the sizes of all tanks, the battery capacity can be increased. The discharge rate of the battery depends on the size of the CDI (2) and RED (1) modules. The charge rate of the battery depends on the size of the desalination module (12), to separate salts faster and thus return to the initial state (charged battery).

Figure 2 describes, in greater detail, the operation of the RED (1) module, for the discharge (A) or supply mode of the invention's system. The stream of concentrated brine (8), coming from CDI (2) module, has a higher osmotic potential compared to the osmotic potential of desalinated water (11). To make the most of the salinity gradient and not generate deformation problems due to the osmotic potential, work is performed in a countercurrent configuration with at least three RED units (18, 19, 20). The number of units will depend on the osmotic potential of the stream of concentrated brine (8), their number increasing as the concentration of the brine increases. When working in a countercurrent configuration, the salinity of the stream of concentrated brine (8) gradually decreases from the first RED unit (18) to the last RED unit (20), until the energy contained in the salinity gradient is completely extracted, obtaining a stream of diluted salts or mixture (10), which is accumulated in the mixture storage tank (5). In the same way, in the injected desalinated water (11), the concentration of salts gradually increases from the last RED unit (20) to the first RED unit (18), until it is completely mixed with the brine, obtaining a stream of diluted salts or mixture (9), which is accumulated in the mixture storage tank (3). The mixture tanks (3, 5) are filled once the maximum energy is extracted from the gradient between the stream of concentrated brine (8) and the desalinated water (11).

In the case in which a greater number of RED units are used inside the module (1), the operation of the system is similar, where the stream of concentrated brine (8) enters the first RED unit and the desalinated water (11) enters the last RED unit, both streams passing in a countercurrent configuration, decreasing the concentration of salts from the stream of concentrated brine (8) and increasing the concentration of salts in the stream of desalinated water (11).

Figure 3 describes, in greater detail, the operation of the CDI module (2). In the charging (B) or storage mode of the invention's system, the concentrated brine (13) coming from the RO/ED (12) module, is treated in the CDI module (2), where an electrical potential is applied on the current collecting electrodes (21, 22). Ions contained in the concentrated brine (13) are transferred to the carbon-based electrodes (23, 24), dialyzing the brine. The desalinated water obtained is accumulated in a tank (6). Once the tank is filled to the maximum battery charge point, the content of the CDI module (2) compartment, which contained the concentrated brine (13), can be replaced with air, so as not to generate a vacuum. By emptying the content of the compartment containing the concentrated brine (13), the diffusion of ions towards the stream of water is avoided, thereby the CDI module (2) is not discharged passively when not in operation. This option is preferred when there are long waiting periods between the charging mode (B) and the discharging mode (A). In the discharging mode (A), the ions contained in the carbon-based electrodes (23, 24) are discharged in the stream of water coming from the storage tank (6). In the discharging mode (A), a concentrated brine (8) is obtained, which will be fed to the RED module (1) for the subsequent extraction of energy. In the discharge of the CDI module (2), the energy is extracted through the current collecting electrodes (21, 22). **It is** in the carbon-based electrodes (23, 24) where some redox species can be included, to add pseudo-capacitance to the CDI module (2), thus increasing the energy that can be charged and discharged in the system.

### Example:

In the following example, a potassium acetate brine is used, which is added to the CDI module (2), with a 10M concentration, at 20°C, with two water storage tanks (4, 6) (with a concentration of salts of 0,05M) and two tanks for storage of diluted salts or mixture (3, 5), with a volume of 2.000 m³ each. When discharging the CDI module (2), an energy release of about 38 MWh occurs, without including pseudo-capacitance. From the RED module RED (1), an energy release of about 15 MWh occurs, indicating a combined capacity of 54 MWh in both modules. The released power of the CDI module is at least 40 MW. The efficiency is about 85-95% and the combined current density of both modules is about 25 kWh/m³.

### Advantages of the Invention:

When using the set of technologies of the present invention, with the battery charging (B) and discharging (A) method, changes in the electrical grid due to overproduction or power failure can be cushioned, especially when renewable partial-production energies are adopted:
➢ In periods of overproduction of electrical energy in a generation plant, electrical energy can be stored for later consumption.
➢ In periods of overload in the distribution grid, electrical energy can be discharged to the system.
➢ When there is overconsumption of electrical energy, the battery can supply for a period of time, mainly determined by the size of the battery.
➢ Accumulation in periods of low prices of electrical energy.
➢ Release or supply in periods where electrical energy has a higher price in the market.
➢ Supply of systems on an industrial scale when there is no availability of electrical energy from the distribution grid.
➢ Supply of systems on an industrial scale when generating turbines fail.
➢ Use of residual heat from the plants, keeping the battery at temperatures between 40 to 60°C, serving the twofold purpose of passive cooling in industrial applications and increasing the solubility of the salts used.

## Claims

1. An electrical energy storage and supply system from a salinity gradient for supply to electrical distribution grids, and complementary to electrical energy generating sources, especially non-conventional renewable energies, such as solar energy and wind energy, wherein said system comprises an industrial salinity gradient battery, which comprises an energy discharging subsystem (A) or supply and an energy charging subsystem (B) or storage, inside the same compartment, sealed, wherein,
the discharging subsystem (A) comprises combining a capacitive deionization module, CDI (2) and a reverse electrodialysis module, RED (1), together with tanks for storage of desalinated water (4, 6) and tanks for storage of dilute salts (3, 5);
the charging subsystem (B) comprises combining CDI module (2) and a desalination module (12), together with the tanks for storage of desalinated water (4, 6) and the tanks for storage of diluted salts (3, 5);
wherein, inside of the CDI module (2), there are highly soluble salts retained, in order to release electrical energy into the discharging subsystem (A) from the electrodes of the CDI module (2) when releasing said contained salts, and in the charging subsystem (B), the same CDI module (2) consumes electrical energy to move the salts towards the electrodes of the CDI module (2), recharging the CDI module (2), returning to the original state.

2. The system according to claim 1, wherein the energy discharging subsystem (A) comprises:
- a tank for storage of desalinated water (6), the content (7) of which passes through the CDI module (2);
- a highly soluble salt contained in the CDI module (2);
- the CDI module (2) that, in discharging mode (A), releases salts contained in the electrodes of the CDI module (2), thereby releasing electrical energy, and obtaining a stream of concentrated brine (8);
- a RED module (1), comprising at least 3 RED units (18, 19, and 20), which receives the stream of concentrated brine (8);
- a tank for storage (4) of desalinated water (11) passing in a countercurrent configuration with the concentrated brine (8) through the RED module (1), generating an electrochemical potential for electrical energy generation; and
- tanks for storage of diluted salts or mixture (3, 5) to accumulate the diluted saline solutions (9, 10) coming from the RED module (1) outlet; and
wherein the energy charging subsystem (B) comprises:
- a desalination module (12) for separating the salt contained in the streams of diluted salts (14, 15) from the tanks for storage of diluted salts or mixture (3, 5), obtaining a stream of concentrated brine (13) and a stream of desalinated water (16);
- the CDI module (2) that, in charging mode (B), consumes electrical energy to move the salts towards the electrodes; wherein the salts come from the stream of concentrated brine (13);
- a tank for storage (4) of desalinated water (16) coming from the desalination module (12); and
- a tank for storage (6) of desalinated water (17) coming from the CDI module (2), to return to the initial state of charged battery.

3. The system according to the preceding claims, wherein the electrodes of the CDI module (2) that release the salts contained in the discharging subsystem (A) or that capture the salts from the stream of concentrated brine (13) in the charging subsystem (B) are carbon-based electrodes (23, 24) selected from: activated carbon, graphene aerogels, or some other carbonized aerogel, and the electrodes that apply energy in the charging subsystem (B) or those that extract energy in the discharging subsystem (A) are current collecting electrodes (21, 22).

4. The system according to claim 2, wherein the highly soluble salt contained in the CDI module (2) of the discharging subsystem (A) is extremely highly soluble in water, pH neutral, non-toxic, and stable under operating conditions and is selected from: sodium acetate or potassium acetate; and wherein the desalination module (12) comprises a reverse osmosis module, RO, or a conventional electrodialysis module, ED, wherein the desalination module (12) is powered with electrical energy from the grid in low consumption or overproduction periods.

5. The system according to claim 4, wherein the salt is potassium acetate (C₂H₃KO₂) with a solubility of 9 to 12M from 0°C to 80°C, non-toxic, low density, low viscosity at high concentrations, pH 7.5-8.5; and wherein the desalination module (12) is a conventional multi-stage ED or multi-stage RO module for gradual desalination.

6. The system according to claim 2, wherein the salt is selected from ammonium nitrate, sodium iodide, cesium chloride, silver nitrate, and a salt with a solubility above 1M in water.

7. The system according to claim 2, wherein the RED module (1) comprises three RED units (18, 19, and 20) acting in a countercurrent configuration for extracting electrical energy from the salinity gradient formed between the concentrated brine (8) and the desalinated water (11); or wherein the RED module (1) comprises more than three RED units acting in a countercurrent configuration for extracting electrical energy from the salinity gradient where the stream of concentrated brine (8) enters the first RED unit and the desalinated water (11) enters the last RED unit, both streams passing in a countercurrent configuration, forming the salinity gradient between them.

8. A method for storing and supplying electrical energy from a salinity gradient for supply to electrical distribution grids, and as a complement to electrical energy generation sources, especially non-conventional renewable energies, such as solar energy and wind energy, comprises providing an industrial salinity gradient battery in a system inside a sealed compartment, with an energy discharging (A) or supply mode and an energy charging (B) or storage mode, wherein:
the discharging mode (A) comprises combining a capacitive deionization module, CDI (2), and a reverse electrodialysis module, RED (1), together with the tanks for storage of desalinated water (4, 6) and the tanks for storage of diluted salts (3, 5);
the charging mode (B) comprises combining the CDI module (2) and a desalination module (12), together with the tanks for storage of desalinated water (4, 6) and the tanks for storage of diluted salts (3, 5);
wherein retained highly soluble salts are provided inside the CDI module (2) in order to release electrical energy in the discharging mode (A) from the electrodes of the CDI module (2) by releasing said contained salts, and in the charging mode (B) the same CDI module (2) consumes electrical energy to move the salts towards the electrodes of the CDI module (2), thereby recharging the CDI module (2), returning to the original state.

9. The method according to claim 8, wherein the discharging mode (A) comprises the steps of:
- providing a tank for desalinated water storage (6), the content (7) of which passes through a CDI module (2);
- providing a tank for desalinated water storage (4), the content (11) of which passes through the RED module (1);
- continuously measuring the level of the water storage tanks (4, 6), directly indicating the level of charging or discharging;
- providing a highly soluble salt contained in the CDI module (2);
- providing a CDI module (2) in discharging mode (A), where salts contained in the electrodes of the CDI module (2) are released, electrical energy is released, and a stream of concentrated brine (8) is obtained;
- leading the salts from the stream of concentrated brine (8) to the RED module (1);
- providing a RED module (1), comprising at least 3 RED units (18, 19, and 20);
- passing the concentrated brine (8) through the RED module (1) in a countercurrent configuration with respect to the desalinated water (11), coming from the desalinated water storage tank (4), generating an electrochemical potential for electrical energy generation from the salinity gradient generated between the concentrated brine (8) and the desalinated water (11); and
- providing diluted salts or mixture tanks (3, 5) for accumulating the diluted saline solutions (9, 10) coming from the RED module (1) outlet; and
wherein the charging mode (B) comprises the steps of:
- providing a desalination module (12);
- providing tanks for mixture storage (3, 5), containing dilute salts (14, 15) in solution;
- passing, through the desalination module (12), streams of mixture or dilute salts (14, 15) coming from the mixture storage tanks (3, 5);
- separating the salt contained in the streams of diluted salts (14, 15) from the mixture storage tanks (3, 5), with electrical energy from the grid or from electrical energy generation sources, in low consumption or overproduction periods;
- obtaining a stream of desalinated water (16) at the desalination module (12) outlet and a stream of brine (13);
- providing a CDI module (2) in charging mode (B), where electrical energy is consumed to move the salts towards the electrodes of the CDI module (2), extracting the salts from the concentrated brine (13) and obtaining a stream of desalinated water (17);
- providing a tank for storage (4) of desalinated water, to store the desalinated water (16) coming from the desalination module (12); and
- providing a tank for storage (6) of desalinated water, to accumulate the water (17) coming from the CDI module (2), to return to the initial charged-battery state.

10. The method according to claims 8 to 9, wherein electrodes are provided in the CDI module (2) that release the salts contained in the discharging mode (A) or that capture the salts from the stream of concentrated brine (13) in the charging mode (B), where said electrodes are carbon-based electrodes (23, 24) selected from: activated carbon, graphene aerogels, or some other carbonized aerogel, and electrodes are provided in the CDI module (2) that apply energy in the charging mode (B) or that extract energy in the discharging mode (A), where said electrodes are current collecting electrodes (21, 22).

11. The method according to claim 9, wherein the highly soluble salt contained in the CDI module (2) of the discharging mode (A) is extremely highly soluble in water, pH neutral, non-toxic, and stable under operating conditions, and is selected from: sodium acetate or potassium acetate; and wherein the desalination module (12) comprises a reverse osmosis module, RO, or a conventional electrodialysis module, ED, wherein the desalination module (12) is powered with electrical energy from the grid in low consumption or overproduction periods.

12. The method according to claim 11, wherein the salt is potassium acetate (C₂H₃KO₂) with a solubility of 9 to 12M from 0°C to 80°C, non-toxic, low density, low viscosity at high concentrations, pH 7.5-8.5; and wherein the desalination module (12) is a conventional multi-stage ED module or a multi-stage RO module, to perform gradual desalination.

13. The method according to claim 9, wherein the salt is selected from ammonium nitrate, sodium iodide, cesium nitrate, silver chloride, and a salt with a solubility in water above 1M; and wherein measuring the level of the water storage tanks (4, 6) indicates the percentage of battery charge, and this measurement is performed using level sensors.

14. The method according to claim 9, wherein the CDI module (2) in discharging mode (A) acts as a supercapacitor to quickly release the energy from the salts contained in the electrodes of the CDI module (2).

15. The method according to claim 9, wherein the module CDI (2) in discharging mode (A) includes pseudo-capacitance to increase the energy stored in the industrial battery, thanks to the presence of components that are oxidized or reduced in the carbon-based electrodes (23, 24) of the CDI module (2), where the components are selected from metal oxides of manganese, iridium, iron, ruthenium, or titanium sulfide.

16. The method according to claims 8 to 15, wherein the operating temperature of the discharging (A) and charging (B) modes varies between 4 and 60°C, preferably from 40 to 60°C, and the operating pressure can reach more than 100 bars (10 MPa) in RO (12), depending on the salt concentration in the brine, and whether a RO (12) cascading or multi-stage configuration is used.

17. The method according to claim 9, wherein the RED module (1) comprises three RED units (18, 19, and 20) which acts in a countercurrent configuration for extracting electrical energy from the salinity gradient formed between the concentrated brine (8) and the desalinated water (11); and wherein the stream of concentrated brine (8) has a high osmotic potential compared to the osmotic potential of the stream of desalinated water (11), the streams face each other in a countercurrent configuration in the RED module (1), which comprises three RED units (18, 19, 20), wherein the stream of concentrated brine (8) enters the first RED unit (18) and its salinity gradually decreases until completely extracting the energy contained in the salinity gradient, obtaining a stream of diluted salts or mixture (10) from the last RED unit (20), which is accumulated in the mixture storage tank (5); in turn, the stream of desalinated water (11) enters the last RED unit (20) gradually increasing the salt concentration until it is completely mixed with the brine, obtaining a stream of diluted salts or mixture (9) from the first RED unit (18), which is accumulated in the storage tank (3); or wherein the stream of concentrated brine (8) has a high osmotic potential compared to the osmotic potential of the stream of desalinated water (11), the streams face each other in a countercurrent configuration in the RED module (1), which comprises more than 3 RED units, where the stream of concentrated brine (8) enters the first RED unit and its salinity gradually decreases until the energy contained in the salinity gradient is completely extracted, obtaining a stream of diluted salts or mixture (10) from the last RED unit, which is accumulated in the mixture storage tank (5); in turn, the stream of desalinated water (11) that enters the last RED unit gradually increases the concentration of salts until it is completely mixed with the brine, obtaining a stream of diluted salts or mixture (9) from the first unit of RED, which is accumulated in the storage tank (3); and wherein the amount of RED units of the RED module (1) will increase as the osmotic potential of the concentrated brine (8) increases.

18. The method according to claims 8 to 17, wherein increasing the size of the tanks for storage of water (4, 6) and diluted salts (3, 5) increases the electrical energy production capacity of the battery; the battery discharge rate depends on the size of the CDI (2) and RED (1) modules; and the battery charge rate depends on the size of the desalination module (12).

19. The method according to claim 9, wherein in the charging mode (B) the concentrated brine (13) coming from the desalination module (12) is treated in the CDI module (2), applying an electric potential on the current collecting electrodes (21, 22), thus transferring the ions contained in the concentrated brine (13) to the carbon-based electrodes (23, 24), dialyzing the brine; the water obtained from this operation accumulates in the storage tank (6); the compartment where the concentrated brine (13) was in the CDI module (2) is filled with air to avoid the generation of a vacuum once the battery has been fully charged, where the latter is measured by filling the water storage tank (6); and wherein in the discharging mode (A), the ions contained in the carbon-based electrodes (23, 24) of the CDI module (2) are discharged in the water stream coming from of the storage tank (6), energy is extracted through the current collecting electrodes (21, 22), and the stream of concentrated brine (8) is obtained, which is led to the RED module (1), where it finishes extracting the remaining energy in the salinity gradient.

## Patentansprüche

1. System zur Speicherung und Bereitstellung elektrischer Energie aus einem Salzgehaltsgradienten zur Versorgung von Stromverteilungsnetzen und als Ergänzung zu Stromerzeugungsquellen, insbesondere nicht-konventionellen erneuerbaren Energien wie Solarenergie und Windenergie, wobei das System eine industrielle Salzgehaltsgradientenbatterie umfasst, welche ein Energieentladungssubsystem (A) oder eine Versorgung und ein Energieaufladungssubsystem (B) oder einen Speicher innerhalb desselben abgedichteten Fachs umfasst, wobei
das Entladungssubsystem (A) eine Kombination aus einem kapazitiven Entionisierungsmodul, CDI (2) und einem Umkehrelektrodialysemodul, RED (1) zusammen mit Tanks zur Speicherung von entsalztem Wasser (4, 6) und Tanks zur Speicherung von verdünnten Salzen (3, 5) umfasst;
das Ladungssubsystem (B) eine Kombination aus dem CDI-Modul (2) und einem Entsalzungsmodul (12) zusammen mit den Tanks zur Speicherung von entsalztem Wasser (4, 6) und den Tanks zur Speicherung von verdünnten Salzen (3, 5) umfasst; wobei innerhalb des CDI-Moduls (2) hochlösliche Salze zurückgehalten sind, um elektrische Energie aus den Elektroden des CDI-Moduls (2) in das Entladungssubsystem (A) freizusetzen, wenn die enthaltenen Salze freigesetzt werden, und in dem Ladungssubsystem (B) dasselbe CDI-Modul (2) elektrische Energie verbraucht, um die Salze in Richtung der Elektroden des CDI-Moduls (2) zu bewegen, wodurch das CDI-Modul (2) wieder aufgeladen wird und in den ursprünglichen Zustand zurückkehrt.

2. System nach Anspruch 1, wobei das Energieentladungssubsystem (A) umfasst:
- einen Tank zur Speicherung von entsalztem Wasser (6), dessen Inhalt (7) das CDI-Modul (2) durchläuft;
- ein hochlösliches Salz, welches in dem CDI-Modul (2) enthalten ist;
- das CDI-Modul (2), welches in einem Entlademodus (A) Salze freisetzt, welche in den Elektroden des CDI-Moduls (2) enthalten sind, wodurch elektrische Energie freigesetzt wird und ein Strom von konzentrierter Sole (8) erhalten wird;
- ein RED-Modul (1), welches wenigstens 3 RED-Einheiten (18, 19 und 20) umfasst und welches den Strom von konzentrierter Sole (8) aufnimmt;
- einen Tank zur Speicherung (4) von entsalztem Wasser (11), welches in einer Gegenstromkonfiguration mit der konzentrierten Sole (8) durch das RED-Modul (1) fließt, wodurch ein elektrochemisches Potenzial zur Erzeugung elektrischer Energie erzeugt wird; und
- Tanks zur Speicherung von verdünnten Salzen oder Mischungen (3, 5), um die verdünnten Salzlösungen (9, 10) zu sammeln, welche aus dem Auslass des RED-Moduls (1) kommen; und
wobei das Energieaufladungssubsystem (B) umfasst:
- ein Entsalzungsmodul (12) zum Trennen des Salzes, welches in den Strömen von verdünnten Salzen (14, 15) enthalten ist, von den Tanks zur Speicherung von verdünnten Salzen oder Mischungen (3, 5), wodurch ein Strom von konzentrierter Sole (13) und ein Strom von entsalztem Wasser (16) erhalten werden;
- das CDI-Modul (2), welches in einem Lademodus (B) elektrische Energie verbraucht, um die Salze in Richtung der Elektroden zu bewegen; wobei die Salze aus dem Strom von konzentrierter Sole (13) kommen;
- einen Tank zur Speicherung (4) von entsalztem Wasser (16), welches aus dem Entsalzungsmodul (12) kommt; und
- einen Tank zur Speicherung (6) von entsalztem Wasser (17), welches aus dem CDI-Modul (2) kommt, um in den ursprünglichen Zustand einer geladenen Batterie zurückzukehren.

3. System nach den vorhergehenden Ansprüchen, wobei die Elektroden des CDI-Moduls (2), welche die Salze freisetzen, welche in dem Entladungssubsystem (A) enthalten sind, oder welche die Salze aus dem Strom von konzentrierter Sole (13) in dem Ladungssubsystem (B) auffangen, kohlenstoffbasierte Elektroden (23, 24) sind, welche ausgewählt sind aus: Aktivkohle, Graphen-Aerogelen oder einem anderen karbonisierten Aerogel, und die Elektroden, welche in dem Ladungssubsystem (B) Energie zuführen, oder diejenigen, welche in dem Entladungssubsystem (A) Energie extrahieren, Stromsammelelektroden (21, 22) sind.

4. System nach Anspruch 2, wobei das hochlösliche Salz, welches in dem CDI-Modul (2) des Entladungssubsystems (A) enthalten ist, extrem hochlöslich in Wasser, pH-neutral, ungiftig und unter Betriebsbedingungen stabil ist und ausgewählt ist aus: Natriumacetat oder Kaliumacetat; und wobei das Entsalzungsmodul (12) ein Umkehrosmosemodul, RO, oder ein herkömmliches Elektrodialysemodul, ED, umfasst, wobei das Entsalzungsmodul (12) in Zeiträumen mit geringem Verbrauch oder Überproduktion mit elektrischer Energie aus dem Netz versorgt wird.

5. System nach Anspruch 4, wobei das Salz Kaliumacetat (C₂H₃KO₂) mit einer Löslichkeit von 9 bis 12 M bei 0 °C bis 80 °C, ungiftig, niedrige Dichte, niedrige Viskosität bei hohen Konzentrationen, pH-Wert 7,5 - 8,5; und wobei das Entsalzungsmodul (12) ein herkömmliches mehrstufiges ED- oder mehrstufiges RO-Modul für eine schrittweise Entsalzung ist.

6. System nach Anspruch 2, wobei das Salz aus Ammoniumnitrat, Natriumiodid, Cäsiumchlorid, Silbernitrat und einem Salz mit einer Löslichkeit von über 1 M in Wasser ausgewählt ist.

7. System nach Anspruch 2, wobei das RED-Modul (1) drei RED-Einheiten (18, 19 und 20) umfasst, welche in einer Gegenstromkonfiguration arbeiten, um elektrische Energie aus dem Salzgehaltsgradienten zu extrahieren, welcher zwischen der konzentrierten Sole (8) und dem entsalzten Wasser (11) gebildet ist; oder wobei das RED-Modul (1) mehr als drei RED-Einheiten umfasst, welche in einer Gegenstromkonfiguration arbeiten, um elektrische Energie aus dem Salzgehaltsgradienten zu extrahieren, wobei der Strom von konzentrierter Sole (8) in die erste RED-Einheit eintritt und das entsalzte Wasser (11) in die letzte RED-Einheit eintritt, wobei beide Ströme in einer Gegenstromkonfiguration strömen, wodurch zwischen ihnen der Salzgehaltsgradient gebildet wird.

8. Verfahren zum Speichern und Liefern elektrischer Energie aus einem Salzgehaltsgradienten zur Versorgung von Stromverteilungsnetzen und als eine Ergänzung zu Stromerzeugungsquellen, insbesondere nicht-konventionellen erneuerbaren Energien wie Solarenergie und Windenergie, umfassend ein Bereitstellen einer industriellen Salzgehaltsgradientenbatterie in einem System innerhalb eines abgedichteten Fachs mit einem Energieentlade- (A) oder Liefermodus und einem Energielademodus (B) oder Speichermodus, wobei:
der Entlademodus (A) ein Kombinieren eines kapazitiven Entionisierungsmoduls, CDI (2) und eines Umkehrelektrodialysemoduls, RED (1) zusammen mit den Tanks zur Speicherung von entsalztem Wasser (4, 6) und den Tanks zur Speicherung von verdünnten Salzen (3, 5) umfasst;
der Lademodus (B) ein Kombinieren des CDI-Moduls (2) und eines Entsalzungsmodul (12) zusammen mit den Tanks zur Speicherung von entsalztem Wasser (4, 6) und den Tanks zur Speicherung von verdünnten Salzen (3, 5) umfasst;
wobei zurückgehaltene hochlösliche Salze innerhalb des CDI-Moduls (2) bereitgestellt werden, um in dem Entlademodus (A) elektrische Energie aus den Elektroden des CDI-Moduls (2) durch ein Freisetzen der enthaltenen Salze freizusetzen, und in dem Lademodus (B) dasselbe CDI-Modul (2) elektrische Energie verbraucht, um die Salze in Richtung der Elektroden des CDI-Moduls (2) zu bewegen, wodurch das CDI-Modul (2) wieder aufgeladen wird und in den ursprünglichen Zustand zurückkehrt.

9. Verfahren nach Anspruch 8, wobei der Entlademodus (A) die folgenden Schritte umfasst:
- Bereitstellen eines Tanks zur Speicherung von entsalztem Wasser (6), dessen Inhalt (7) ein CDI-Modul (2) durchläuft;
- Bereitstellen eines Tanks zur Speicherung von entsalztem Wasser (4), dessen Inhalt (11) das RED-Modul (1) durchläuft;
- kontinuierlich Messen des Füllstands der Wasserspeichertanks (4, 6), wodurch der Grad einer Ladung oder einer Entladung direkt angezeigt wird;
- Bereitstellen eines hochlöslichen Salzes, welches in dem CDI-Modul (2) enthalten ist;
- Bereitstellen eines CDI-Moduls (2) in einem Entlademodus (A), in welchem Salze freigesetzt werden, welche in den Elektroden des CDI-Moduls (2) enthalten sind, elektrische Energie freigesetzt wird und ein Strom von konzentrierter Sole (8) erhalten wird;
- Leiten der Salze aus dem Strom von konzentrierter Sole (8) zu dem RED-Modul (1);
- Bereitstellen eines RED-Moduls (1), welches wenigstens 3 RED-Einheiten (18, 19 und 20) umfasst;
- Leiten der konzentrierten Sole (8) durch das RE-Modul (1) in einer Gegenstromkonfiguration in Bezug auf das entsalzte Wasser (11), welches aus dem Speichertank (4) für entsalztes Wasser kommt, wodurch ein elektrochemisches Potential zur Erzeugung elektrischer Energie aus dem Salzgehaltsgradienten erzeugt wird, welcher zwischen der konzentrierten Sole (8) und dem entsalzten Wasser (11) erzeugt wird; und
- Bereitstellen von Tanks für verdünnte Salze oder Mischungen (3, 5) zum Sammeln der verdünnten Salzlösungen (9, 10), welche aus dem Auslass des RED-Moduls (1) kommen; und
wobei der Lademodus (B) die folgenden Schritte umfasst:
- Bereitstellen eines Entsalzungsmoduls (12),
- Bereitstellen von Tanks für eine Mischungsspeicherung (3, 5), welche verdünnte Salze (14, 15) in einer Lösung enthalten;
- Leiten durch das Entsalzungsmodul (12) von Strömen einer Mischung oder von verdünnten Salzen (14, 15), welche aus den Mischungsspeichertanks (3, 5) kommen;
- Trennen des Salzes, welches in den Strömen von verdünnten Salzen (14, 15) enthalten ist, von den Mischungsspeichertanks (3, 5) mit elektrischer Energie aus dem Netz oder aus Stromerzeugungsquellen in Zeiträumen mit geringem Verbrauch oder Überproduktion;
- Erhalten eines Stroms von entsalztem Wasser (16) an dem Auslass des Entsalzungsmoduls (12) und eines Stroms von Sole (13);
- Bereitstellen eines CDI-Moduls (2) in einem Lademodus (B), in welchem elektrische Energie verbraucht wird, um die Salze in Richtung der Elektroden des CDI-Moduls (2) zu bewegen, wodurch die Salze aus der konzentrierten Sole (13) extrahiert werden und einen Strom von entsalztem Wasser (17) erhalten wird;
- Bereitstellen eines Tanks zur Speicherung (4) von entsalztem Wasser, um das entsalzte Wasser (16) zu speichern, welches aus dem Entsalzungsmodul (12) kommt; und
- Bereitstellen eines Tanks zur Speicherung (6) von entsalztem Wasser, um das Wasser (17) zu sammeln, welches aus dem CDI-Modul (2) kommt, um in den ursprünglichen Zustand einer geladenen Batterie zurückzukehren.

10. Verfahren nach Anspruch 8 oder 9, wobei Elektroden in dem CDI-Modul (2) bereitgestellt werden, welche die Salze freisetzen, welche in dem Entlademodus (A) enthalten sind, oder welche die Salze aus dem Strom von konzentrierter Sole (13) in dem Lademodus (B) auffangen, wobei die Elektroden kohlenstoffbasierte Elektroden (23, 24) sind, welche ausgewählt sind aus: Aktivkohle, Graphen-Aerogelen oder einem anderen karbonisierten Aerogel, und Elektroden in dem CDI-Modul (2) bereitgestellt werden, welche in dem Lademodus (B) Energie zuführen oder welche in dem Entlademodus (A) Energie extrahieren, wobei die Elektroden Stromsammelelektroden (21, 22) sind.

11. Verfahren nach Anspruch 9, wobei das hochlösliche Salz, welches in dem CDI-Modul (2) des Entlademodus (A) enthalten ist, extrem hochlöslich in Wasser, pH-neutral, ungiftig und unter Betriebsbedingungen stabil ist und ausgewählt ist aus: Natriumacetat oder Kaliumacetat; und wobei das Entsalzungsmodul (12) ein Umkehrosmosemodul, RO, oder ein herkömmliches Elektrodialysemodul, ED, umfasst, wobei das Entsalzungsmodul (12) in Zeiträumen mit geringem Verbrauch oder Überproduktion mit elektrischer Energie aus dem Netz angetrieben wird.

12. Verfahren nach Anspruch 11, wobei das Salz Kaliumacetat (C₂H₃KO₂) mit einer Löslichkeit von 9 bis 12 M bei 0 °C bis 80 °C, ungiftig, niedrige Dichte, niedrige Viskosität bei hohen Konzentrationen, pH-Wert 7,5 - 8,5; und wobei das Entsalzungsmodul (12) ein herkömmliches mehrstufiges ED-Modul oder ein mehrstufiges RO-Modul ist, um eine schrittweise Entsalzung durchzuführen.

13. Verfahren nach Anspruch 9, wobei das Salz aus Ammoniumnitrat, Natriumiodid, Cäsiumnitrat, Silberchlorid und einem Salz mit einer Löslichkeit in Wasser von über 1 M ausgewählt ist; und wobei ein Messen des Füllstands der Wasserspeichertanks (4, 6) den Prozentsatz einer Batterieladung angibt und diese Messung unter Verwendung von Füllstandsensoren durchgeführt wird.

14. Verfahren nach Anspruch 9, wobei das CDI-Modul (2) in einem Entlademodus (A) als ein Superkondensator arbeitet, um die Energie aus den Salzen, welche in den Elektroden des CDI-Moduls (2) enthalten sind, schnell freizusetzen.

15. Verfahren nach Anspruch 9, wobei das Modul CDI (2) in einem Entlademodus (A) eine Pseudokapazität aufweist, um die Energie zu erhöhen, welche in der industriellen Batterie gespeichert ist, dank des Vorhandenseins von Komponenten, welche in den kohlenstoffbasierten Elektroden (23, 24) des CDI-Moduls (2) oxidiert oder reduziert werden, wobei die Komponenten aus Metalloxiden von Mangan, Iridium, Eisen, Ruthenium oder Titansulfid ausgewählt sind.

16. Verfahren nach einem der Ansprüche 8 bis 15, wobei die Betriebstemperatur des Entlademodus (A) und des Lademodus (B) zwischen 4 und 60 °C, vorzugsweise von 40 bis 60 °C, variiert und der Betriebsdruck in einem RO (12) mehr als 100 bar (10 MPa) erreichen kann, abhängig von der Salzkonzentration in der Sole und davon, ob eine RO (12) -Kaskaden- oder Mehrstufenkonfiguration verwendet wird.

17. Verfahren nach Anspruch 9, wobei das RED-Modul (1) drei RED-Einheiten (18, 19 und 20) umfasst, welche in einer Gegenstromkonfiguration arbeiten, um elektrische Energie aus dem Salzgehaltsgradienten zu extrahieren, welcher zwischen der konzentrierten Sole (8) und dem entsalzten Wasser (11) gebildet wird; und wobei der Strom von konzentrierter Sole (8) im Vergleich zu dem osmotischen Potenzial des Stroms von entsalztem Wasser (11) ein hohes osmotisches Potenzial aufweist, wobei die Ströme in einer Gegenstromkonfiguration in dem RED-Modul (1) einander zugewandt sind, welches drei RED-Einheiten (18, 19, 20) umfasst, wobei der Strom von konzentrierter Sole (8) in die erste RED-Einheit (18) eintritt und sein Salzgehalt allmählich abnimmt, bis die Energie vollständig extrahiert ist, welche in dem Salzgehaltsgradienten enthalten ist, wodurch ein Strom von verdünnten Salzen oder einer Mischung (10) aus der letzten RED-Einheit (20) erhalten wird, welcher in dem Mischungsspeichertank (5) gesammelt wird; wobei wiederum der Strom von entsalztem Wasser (11) in die letzte RED-Einheit (20) eintritt, wodurch die Salzkonzentration allmählich ansteigt, bis er vollständig mit der Sole vermischt ist, wodurch ein Strom von verdünnten Salzen oder einer Mischung (9) aus der ersten RED-Einheit (18) erhalten wird, welcher in dem Speichertank (3) gesammelt wird; oder wobei der Strom von konzentrierter Sole (8) im Vergleich zu dem osmotischen Potenzial des Stroms von entsalztem Wasser (11) ein hohes osmotisches Potenzial aufweist, wobei die Ströme in einer Gegenstromkonfiguration in dem RED-Modul (1) einander zugewandt sind, welches mehr als 3 RED-Einheiten umfasst, wobei der Strom von konzentrierter Sole (8) in die erste RED-Einheit eintritt und sein Salzgehalt allmählich abnimmt, bis die Energie vollständig extrahiert ist, welche in dem Salzgehaltsgradienten enthalten ist, wodurch ein Strom von verdünnten Salzen oder einer Mischung (10) aus der letzten RED-Einheit erhalten wird, welcher in dem Mischungsspeichertank (5) gesammelt wird; wobei wiederum der Strom von entsalztem Wasser (11), welcher in die letzte RED-Einheit eintritt, allmählich die Konzentration von Salzen erhöht, bis er vollständig mit der Sole vermischt ist, wodurch ein Strom von verdünnten Salzen oder einer Mischung (9) aus der ersten RED-Einheit erhalten wird, welcher in dem Speichertank (3) gesammelt wird; und wobei sich die Menge von RED-Einheiten des RED-Moduls (1) erhöhen wird, wenn sich das osmotische Potenzial der konzentrierten Sole (8) erhöht.

18. Verfahren nach einem der Ansprüche 8 bis 17, wobei ein Erhöhen der Größe der Tanks zur Speicherung von Wasser (4, 6) und verdünnten Salzen (3, 5) die Erzeugungskapazität für elektrische Energie der Batterie erhöht; die Batterieentladungsrate von der Größe der CDI- (2) und der RED- (1) Module abhängt; und die Batterieladerate von der Größe des Entsalzungsmoduls (12) abhängt.

19. Verfahren nach Anspruch 9, wobei in dem Lademodus (B) die konzentrierte Sole (13), welche aus dem Entsalzungsmodul (12) kommt, in dem CDI-Modul (2) behandelt wird, wodurch ein elektrisches Potential an die Stromsammelelektroden (21, 22) angelegt wird, wodurch die Ionen, welche in der konzentrierten Sole (13) enthalten sind, auf die kohlenstoffbasierten Elektroden (23, 24) übertragen werden, wodurch die Sole dialysiert wird; wobei sich das aus diesem Vorgang erhaltene Wasser in dem Speichertank (6) sammelt; wobei das Fach, in welchem sich die konzentrierte Sole (13) befand, in dem CDI-Modul (2) mit Luft gefüllt wird, um die Erzeugung eines Vakuums zu vermeiden, sobald die Batterie vollständig geladen worden ist, wobei das Letztere durch ein Füllen des Wasserspeichertanks (6) gemessen wird; und wobei in dem Entlademodus (A) die Ionen, welche in den kohlenstoffbasierten Elektroden (23, 24) des CDI-Moduls (2) enthalten sind, in den Wasserstrom entladen werden, welcher aus dem Speichertank (6) kommt, Energie über die Stromsammelelektroden (21, 22) extrahiert wird und der Strom von konzentrierter Sole (8) erhalten wird, welcher zu dem RED-Modul (1) geleitet wird, wo er ein die verbleibende Energie in dem Salzgehaltsgradienten vollends extrahiert.

## Revendications

1. Système de stockage et d'alimentation en énergie électrique basé sur un gradient de salinité pour alimenter des réseaux de distribution électrique, et complémentaire à des sources de production d'énergie électrique, notamment des énergies renouvelables non conventionnelles, telles que l'énergie solaire et l'énergie éolienne, dans lequel ledit système comprend une batterie industrielle à gradient de salinité, qui comprend un sous-système de décharge d'énergie (A) ou d'alimentation et un sous-système de charge d'énergie (B) ou de stockage, à l'intérieur du même compartiment étanche, dans lequel
le sous-système de décharge (A) comprend la combinaison d'un module de déionisation capacitive (CDI) (2) et d'un module d'électrodialyse inverse (RED) (1), conjointement avec des réservoirs pour le stockage d'eau dessalée (4, 6) et des réservoirs pour le stockage de sels dilués (3, 5) ;
le sous-système de charge (B) comprend la combinaison d'un module CDI (2) et d'un module de dessalement (12), conjointement avec les réservoirs de stockage d'eau dessalée (4, 6) et les réservoirs de stockage de sels dilués (3, 5) ;
dans lequel, à l'intérieur du module CDI (2), des sels hautement solubles sont retenus afin de libérer de l'énergie électrique dans le sous-système de décharge (A) à partir des électrodes du module CDI (2) lors de la libération desdits sels contenus. Dans le sous-système de charge (B), le même module CDI (2) consomme de l'énergie électrique pour déplacer les sels en direction des électrodes du module CDI (2), rechargeant ainsi le module CDI (2) et revenant à l'état d'origine.

2. Système selon la revendication 1, dans lequel le sous-système de décharge d'énergie (A) comprend :
- un réservoir de stockage d'eau dessalée (6), dont le contenu (7) traverse le module CDI (2) ;
- un sel hautement soluble contenu dans le module CDI (2) ;
- le module CDI (2) qui, dans le mode de décharge (A), libère les sels contenus dans les électrodes du module CDI (2), libérant ainsi de l'énergie électrique et obtenant un flux de saumure concentrée (8) ;
- un module RED (1), comprenant au moins trois unités RED (18, 19 et 20), qui reçoit le flux de saumure concentrée (8) ;
- un réservoir de stockage (4) d'eau dessalée (11) passant dans une configuration à contre-courant avec la saumure concentrée (8) à travers le module RED (1), générant un potentiel électrochimique pour la production d'énergie électrique ; et
- des réservoirs de stockage de sels dilués ou de mélanges (3, 5) pour accumuler les solutions salines diluées (9, 10) provenant de la sortie du module RED (1) ; et
dans lequel le sous-système de charge d'énergie (B) comprend :
- un module de dessalement (12) destiné à séparer le sel contenu dans les flux de sels dilués (14, 15) des cuves de stockage de sels dilués ou de mélanges (3, 5), obtenant un flux de saumure concentrée (13) et un flux d'eau dessalée (16) ;
- le module CDI (2) qui, dans un mode de charge (B), consomme de l'énergie électrique pour déplacer les sels en direction des électrodes ; dans lequel les sels proviennent du flux de saumure concentrée (13) ;
- un réservoir de stockage (4) d'eau dessalée (16) provenant du module de dessalement (12) ; et
- un réservoir de stockage (6) d'eau dessalée (17) provenant du module CDI (2), pour revenir à l'état initial de la batterie chargée.

3. Système selon les revendications précédentes, dans lequel les électrodes du module CDI (2) qui libèrent les sels contenus dans le sous-système de décharge (A) ou qui capturent les sels provenant du flux de saumure concentrée (13) dans le sous-système de charge (B) sont des électrodes à base de carbone (23, 24) choisies parmi : le charbon actif, les aérogels de graphène ou certains autres aérogels carbonisés, et les électrodes qui appliquent de l'énergie dans le sous-système de charge (B) ou celles qui extraient de l'énergie dans le sous-système de décharge (A) sont des électrodes de collecte de courant (21, 22).

4. Système selon la revendication 2, dans lequel le sel hautement soluble contenu dans le module CDI (2) du sous-système de décharge (A) est extrêmement soluble dans l'eau, à pH neutre, non toxique et stable dans des conditions de fonctionnement et est choisi parmi : l'acétate de sodium ou l'acétate de potassium ; et dans lequel le module de dessalement (12) comprend un module d'osmose inverse, RO, ou un module d'électrodialyse conventionnel, ED, dans lequel le module de dessalement (12) est alimenté en énergie électrique provenant du réseau pendant des périodes de faible consommation ou de surproduction.

5. Système selon la revendication 4, dans lequel le sel est de l'acétate de potassium (C₂H₃KO₂) avec une solubilité de 9 à 12 M de 0°C à 80°C, non toxique, de faible densité, de faible viscosité à des concentrations élevées, à pH de 7,5-8,5 ; et dans lequel le module de dessalement (12) est un module conventionnel multi-étagé ED ou RO pour un dessalement progressif.

6. Système selon la revendication 2, dans lequel le sel est sélectionné parmi le nitrate d'ammonium, l'iodure de sodium, le chlorure de césium, le nitrate d'argent et un sel ayant une solubilité supérieure à 1 M dans l'eau.

7. Système selon la revendication 2, dans lequel le module RED (1) comprend trois unités RED (18, 19 et 20) agissant dans une configuration à contre-courant pour extraire de l'énergie électrique du gradient de salinité formé entre la saumure concentrée (8) et l'eau dessalée (11) ; ou dans lequel le module RED (1) comprend plus de trois unités RED agissant dans une configuration à contre-courant pour extraire de l'énergie électrique du gradient de salinité où le flux de saumure concentrée (8) entre dans la première unité RED et l'eau dessalée (11) entre dans la dernière unité RED, les deux flux passant dans une configuration à contre-courant, formant le gradient de salinité entre eux.

8. Procédé de stockage et d'alimentation en d'énergie électrique à partir d'un gradient de salinité pour alimenter des réseaux de distribution électrique, en complément de sources de production d'énergie électrique, notamment des énergies renouvelables non conventionnelles telles que l'énergie solaire et l'énergie éolienne, consistant à fournir une batterie industrielle à gradient de salinité dans un système à l'intérieur d'un compartiment étanche, avec un mode de décharge d'énergie (A) ou d'alimentation et un mode de charge d'énergie (B) ou de stockage, dans lequel :
le mode de décharge (A) comprend la combinaison d'un module de déionisation capacitive (CDI) (2) et d'un module d'électrodialyse inverse (RED) (1), conjointement avec les réservoirs de stockage d'eau dessalée (4, 6) et les réservoirs de stockage de sels dilués (3, 5) ;
le mode de charge (B) comprend la combinaison du module CDI (2) et d'un module de dessalement (12), conjointement avec les réservoirs de stockage d'eau dessalée (4, 6) et les réservoirs de stockage de sels dilués (3, 5) ;
dans lequel des sels hautement solubles sont disposés à l'intérieur du module CDI (2) afin de libérer de l'énergie électrique dans le mode de décharge (A) à partir des électrodes du module CDI (2) en libérant lesdits sels contenus, et dans le mode de charge (B), le même module CDI (2) consomme de l'énergie électrique pour déplacer les sels en direction des électrodes du module CDI (2), rechargeant ainsi le module CDI (2) et revenant à l'état d'origine.

9. Procédé selon la revendication 8, dans lequel le mode de décharge (A) comprend les étapes suivantes :
- la fourniture d'un réservoir de stockage d'eau dessalée (6), dont le contenu (7) traverse un module CDI (2) ;
- la fourniture d'un réservoir de stockage d'eau dessalée (4), dont le contenu (11) traverse le module RED (1) ;
- la mesure en continu du niveau des réservoirs de stockage d'eau (4, 6), indiquant directement le niveau de charge ou de décharge ;
- la fourniture d'un sel hautement soluble contenu dans le module CDI (2) ;
- la fourniture d'un module CDI (2) dans le mode de décharge (A), où des sels contenus dans les électrodes du module CDI (2) sont libérés, de l'énergie électrique est libérée, et un flux de saumure concentrée (8) est obtenu ;
- l'acheminement des sels du flux de saumure concentrée (8) vers le module RED (1) ;
- la fourniture d'un module RED (1), comprenant au moins trois unités RED (18, 19 et 20) ;
- le passage de la saumure concentrée (8) à travers le module RED (1) dans une configuration à contre-courant par rapport à l'eau dessalée (11), provenant du réservoir de stockage d'eau dessalée (4), générant un potentiel électrochimique pour la génération d'énergie électrique à partir du gradient de salinité généré entre la saumure concentrée (8) et l'eau dessalée (11) ; et
- la fourniture de sels dilués ou de réservoirs de mélange (3, 5) pour accumuler les solutions salines diluées (9, 10) provenant de la sortie du module RED (1) ; et
dans lequel le mode de charge (B) comprend les étapes suivantes :
- la fourniture d'un module de dessalement (12) ;
- la fourniture de réservoirs pour le stockage de mélange (3, 5), contenant des sels dilués (14, 15) en solution ;
- le passage, à travers le module de dessalement (12), de flux de mélange ou de sels dilués (14, 15) provenant des réservoirs de stockage de mélange (3, 5) ;
- la séparation du sel contenu dans les flux de sels dilués (14, 15) des cuves de stockage de mélange (3, 5), avec de l'énergie électrique provenant du réseau ou de sources de production d'énergie électrique, durant les périodes de faible consommation ou de surproduction ;
- l'obtention d'un flux d'eau dessalée (16) au niveau de la sortie du module de dessalement (12) et d'un flux de saumure (13) ;
- la fourniture d'un module CDI (2) dans le mode de charge (B), où de l'énergie électrique est consommée pour déplacer les sels en direction des électrodes du module CDI (2), extrayant les sels de la saumure concentrée (13) et obtenant un flux d'eau dessalée (17) ;
- la fourniture d'un réservoir de stockage (4) d'eau dessalée pour stocker l'eau dessalée (16) provenant du module de dessalement (12) ; et
- la fourniture d'un réservoir de stockage (6) d'eau dessalée, pour accumuler l'eau (17) provenant du module CDI (2), pour revenir à l'état initial de la batterie chargée.

10. Procédé selon les revendications 8 à 9, dans lequel des électrodes sont disposées dans le module CDI (2) qui libèrent les sels contenus dans le mode de décharge (A) ou qui capturent les sels du flux de saumure concentrée (13) dans le mode de charge (B), lesdites électrodes étant des électrodes à base de carbone (23, 24) choisies parmi : le charbon actif, les aérogels de graphène ou d'autres aérogels carbonisés, et des électrodes sont également disposées dans le module CDI (2) qui appliquent de l'énergie dans le mode de charge (B) ou qui extraient de l'énergie dans le mode de décharge (A), dans lequel lesdites électrodes sont des électrodes de collecte de courant (21, 22).

11. Procédé selon la revendication 9, dans lequel le sel hautement soluble contenu dans le module CDI (2) du mode de décharge (A) est extrêmement soluble dans l'eau, à pH neutre, non toxique et stable dans des conditions de fonctionnement, et est choisi parmi : l'acétate de sodium ou l'acétate de potassium ; et dans lequel le module de dessalement (12) comprend un module d'osmose inverse (RO) ou un module d'électrodialyse conventionnel (ED), dans lequel le module de dessalement (12) est alimenté en énergie électrique provenant du réseau pendant des périodes de faible consommation ou de surproduction.

12. Procédé selon la revendication 11, dans lequel le sel est de l'acétate de potassium (C₂H₃KO₂) avec une solubilité de 9 à 12 M de 0°C à 80°C, non toxique, de faible densité, de faible viscosité à des concentrations élevées, à pH de 7,5-8,5 ; et dans lequel le module de dessalement (12) est un module ED multi-étages ou un module RO multi-étages conventionnel pour réaliser un dessalement progressif.

13. Procédé selon la revendication 9, dans lequel le sel est choisi parmi le nitrate d'ammonium, l'iodure de sodium, le nitrate de césium, le chlorure d'argent et un sel ayant une solubilité dans l'eau supérieure à 1 M ; et dans lequel la mesure du niveau des réservoirs de stockage d'eau (4, 6) indique le pourcentage de charge de la batterie, cette mesure étant effectuée au moyen de capteurs de niveau.

14. Procédé selon la revendication 9, dans lequel le module CDI (2) dans le mode de décharge (A) agit comme un supercondensateur pour libérer rapidement l'énergie des sels contenus dans les électrodes du module CDI (2).

15. Procédé selon la revendication 9, dans lequel le module CDI (2) dans le mode de décharge (A) comprend une pseudo-capacité pour augmenter l'énergie stockée dans la batterie industrielle, grâce à la présence de composants qui sont oxydés ou réduits dans les électrodes à base de carbone (23, 24) du module CDI (2), ces composants étant choisis parmi des oxydes métalliques de manganèse, d'iridium, de fer, de ruthénium ou de sulfure de titane.

16. Procédé selon les revendications 8 à 15, dans lequel la température de fonctionnement des modes de décharge (A) et de charge (B) varie entre 4 et 60°C, de préférence de 40 à 60°C, et la pression de fonctionnement peut atteindre plus de 100 bars (10 MPa) en RO (12), en fonction de la concentration en sel dans la saumure, et si oui ou non une configuration en cascade ou multi-étagée de RO (12) est utilisée.

17. Procédé selon la revendication 9, dans lequel le module RED (1) comprend trois unités RED (18, 19 et 20) qui fonctionnent dans une configuration à contre-courant pour extraire de l'énergie électrique du gradient de salinité formé entre la saumure concentrée (8) et l'eau dessalée (11) ; et dans lequel le flux de saumure concentrée (8) présente un potentiel osmotique élevé par rapport au potentiel osmotique du flux d'eau dessalée (11), les flux se faisant face dans une configuration à contre-courant dans le module RED (1), qui comprend trois unités RED (18, 19, 20), où le flux de saumure concentrée (8) pénètre dans la première unité RED (18) et sa salinité diminue progressivement jusqu'à extraction complète de l'énergie contenue dans le gradient de salinité, obtenant un flux de sels dilués ou de mélange (10) à partir de la dernière unité RED (20), qui est accumulé dans le réservoir de stockage de mélange (5) ; à son tour, le flux d'eau dessalée (11) pénètre dans la dernière unité RED (20) en augmentant progressivement la concentration en sel jusqu'à ce qu'il soit complètement mélangé à la saumure, obtenant un flux de sels dilués ou de mélange (9) à partir de la première unité RED (18), qui est accumulé dans le réservoir de stockage (3) ; ou dans lequel le flux de saumure concentrée (8) présente un potentiel osmotique élevé par rapport au potentiel osmotique du flux d'eau dessalée (11), les flux se faisant face dans une configuration à contre-courant dans le module RED (1), qui comprend plus de trois unités RED, où le flux de saumure concentrée (8) pénètre dans la première unité RED et sa salinité diminue progressivement jusqu'à ce que l'énergie contenue dans le gradient de salinité soit complètement extraite, obtenant un flux de sels dilués ou de mélange (10) à partir de la dernière unité RED, qui est accumulé dans le réservoir de stockage de mélange (5) ; à son tour, le flux d'eau dessalée (11) qui pénètre dans la dernière unité RED augmente progressivement la concentration en sels jusqu'à ce qu'il soit complètement mélangé avec la saumure, obtenant un flux de sels dilués ou de mélange (9) à partir de la première unité RED, qui est accumulé dans le réservoir de stockage (3) ; et dans lequel le nombre d'unités RED du module RED (1) augmentera à mesure que le potentiel osmotique de la saumure concentrée (8) augmente.

18. Procédé selon les revendications 8 à 17, dans lequel l'augmentation de la taille des réservoirs de stockage d'eau (4, 6) et de sels dilués (3, 5) augmente la capacité de production d'énergie électrique de la batterie ; le taux de décharge de la batterie dépend de la taille des modules CDI (2) et RED (1) ; et le taux de charge de la batterie dépend de la taille du module de dessalement (12).

19. Procédé selon la revendication 9, dans lequel, dans le mode de charge (B), la saumure concentrée (13) provenant du module de dessalement (12) est traitée dans le module CDI (2), en appliquant un potentiel électrique sur les électrodes de collecte de courant (21, 22), transférant ainsi les ions contenus dans la saumure concentrée (13) aux électrodes à base de carbone (23, 24), ce qui permet de dialyser la saumure ; l'eau obtenue à partir de cette opération s'accumule dans le réservoir de stockage (6) ; le compartiment où la saumure concentrée (13) se trouvait dans le module CDI (2) est rempli d'air pour éviter la formation d'un vide une fois la batterie complètement chargée, ce dernier étant mesuré par le remplissage du réservoir de stockage d'eau (6) ; et dans le mode de décharge (A), les ions contenus dans les électrodes à base de carbone (23, 24) du module CDI (2) sont déchargés dans le flux d'eau provenant du réservoir de stockage (6), de l'énergie étant extraite à travers les électrodes de collecte de courant (21, 22), et le flux de saumure concentrée (8) est obtenu, qui est dirigé vers le module RED (1), où il termine l'extraction de l'énergie restante dans le gradient de salinité.
